# EUROPEAN PATENT APPLICATION

(11) **EP 4 851 698 A1**
(43) Date of publication of application: **09.12.2026**
(21) Application number: 25747845.3
(22) Date of filing: 24.01.2025
(51) Int. Cl.: G02B 27/01, G02B 30/56

(54) **VEHICLE-MOUNTED DISPLAY SYSTEM, AND VEHICLE**

(30) Priority: 31.01.2024 CN 202410142073
(71) Applicant: Anhui Easpeed Technology Co., Ltd., Hefei, Anhui 230000 (CN)
(72) Inventor: ZHANG, Liangliang, Hefei, Anhui 230000 (CN); HAN, Dongcheng, Hefei, Anhui 230000 (CN)
(74) Representative: Mathys & Squire
(86) International application number: PCT/CN2025/074759
(87) International publication number: WO 2025/162277

(57) **Abstract**

A vehicle-mounted display system (100), and a vehicle (200). The vehicle-mounted display system (100) comprises: a first display panel (30), which is configured to emit first image light (L1); a second display panel (50), which is configured to emit second image light (L2); a flat lens (10), which is arranged on the same side of the first display panel (30) and the second display panel (50), is configured to receive the first image light (LI) and emit third image light (L3), and is further configured to receive the second image light (L2) and emit fourth image light (L4); and an imaging medium (70), which is arranged on the side of the flat lens (10) away from the first display panel (30) and the second display panel (50), is configured to receive and reflect the third image light (L3) for projection to form a first real image (A), and is further configured to receive and reflect the fourth image light (L4) for projection to form a second real image (B).

## Description

### CROSS-REFERENCE TO RELATED APPLICATION

The application claims the benefit and priority to Chinese Patent Application Serial No. 202410142073.8, filed on January 31, 2024, in China National Intellectual Property Administration, entitled "VEHICLE-MOUNTED DISPLAY SYSTEM AND VEHICLE", and the content of which is hereby fully incorporated by reference.

### FIELD

The present disclosure relates to a vehicle-mounted display system and a vehicle having the vehicle-mounted display system.

### BACKGROUND

A vehicle-mounted display system is typically arranged at a central position of a center console of a vehicle. The vehicle-mounted display system is provided for users, such as a driver of the vehicle, to perform central control operations or view vehicle information. However, looking down at a screen of the vehicle-mounted display system while driving deviates the driver's gaze from the road, which may cause a great potential safety hazard. An advanced vehicle-mounted display system based on aerial imaging technology can project real images into mid-air, so that the driver can view the vehicle information displayed without looking down. However, the real image formed based on the aerial imaging technology has a relatively small viewing angle range, which cannot satisfy a need for simultaneous viewing by both the driver and the front passenger.

### SUMMARY

In a first aspect, the present disclosure provides a vehicle-mounted display system. The vehicle-mounted display system includes: a first display panel for emitting first image light; a second display panel for emitting second image light; a flat lens disposed on a light-emitting side of the first display panel and a light-emitting side of the second display panel, configured to receive the first image light and emitting third image light, and further for receiving the second image light and emitting fourth image light; and an imaging medium disposed on a side of the flat lens away from the first display panel and the second display panel, for receiving and reflecting the third image light for projection to form a first real image, and further for receiving and reflecting the fourth image light for projection to form a second real image.

The vehicle-mounted display system provided by the embodiments of the present disclosure provided with the first display panel and the second display panel and the flat lens, can project the contents displayed by both the first display panel and the second display panel into the mid-air through the single flat lens, thereby forming the first real image and the second real image independently. Positions of the first real image and the second real image can be adjusted by respectively reflecting the third image light and the fourth image light by the imaging medium, so that the first real image and second real image can be projected and displayed corresponding to a position of the driver and a position of the front passenger respectively, thereby achieving multi-view viewing and improving the viewing angle of the vehicle-mounted display system.

In one embodiment, wherein the flat lens comprises an equivalent negative refractive flat lens.

In one embodiment, wherein an angle between the first display panel and the flat lens is 30°-60°; and an angle between the second display panel and the flat lens is 30°-60°.

In one embodiment, the vehicle-mounted display system further comprising a first reflector, wherein the first reflector is disposed on a side of the first display panel and the second display panel away from the flat lens; the first reflector is configured to reflect the first image light emitted from the first display panel and the second image light emitted from the second display panel, and is further for reflecting the first image light onto the flat lens and reflecting the second image light emitted from the second display panel onto the flat lens.

In one embodiment, the vehicle-mounted display system further comprising a second reflector and a third reflector, wherein the second reflector is disposed between the first display panel and the flat lens and is configured to reflect the first image light emitted from the first display panel onto the flat lens; and the third reflector is disposed between the second display panel and the flat lens and is configured to reflect the second image light emitted from the second display panel onto the flat lens.

In one embodiment, the vehicle-mounted display system further comprising a control device electrically connected to the first display panel and the second display panel respectively, and the control device is configured to control the first display panel and the second display panel to display images.

In one embodiment, the vehicle-mounted display system further comprising a light sensor electrically connected to the control device, and the light sensor is configured to sense an interactive action of a user and to send a first interaction signal to the control device.

In one embodiment, the vehicle-mounted display system further comprising a sound sensor electrically connected to the control device, the sound sensor electrically is configured to receive a sound signal and for sending a second interaction signal to the control device.

In a second aspect, the present disclosure provides a vehicle including a center console and the vehicle-mounted display system as described above. The vehicle-mounted display system is partially embedded in the center console.

In one embodiment, the vehicle further comprising a windshield disposed on one side of the center console, wherein the imaging medium is integrally formed with the windshield.

### BRIEF DESCRIPTION OF THE DRAWINGS

In order to more clearly illustrate the technical solutions in the embodiments of the present disclosure, the accompanying drawings required for describing the embodiments are briefly introduced below. It is apparent that the accompanying drawings described below are merely some embodiments of the present disclosure, and those of ordinary skill in the art may also obtain other drawings based on these accompanying drawings without inventive effort.
FIG. 1 is a perspective view of a vehicle and a vehicle-mounted display system according to an embodiment of the present disclosure.
FIG. 2 is a perspective view of an optical path structure of a vehicle-mounted display system according to an embodiment of the present disclosure.
FIG. 3 is a perspective view of a flat lens according to an embodiment of the present disclosure.
FIG. 4 is an exploded structural diagram of the flat lens shown in FIG. 3.
FIG. 5 is a schematic front view of a flat lens according to an embodiment of the present disclosure.
FIG. 6 is a partial perspective view of an optical waveguide array according to an embodiment of the present disclosure.
FIG. 7 is a schematic diagram of an optical path structure of a flat lens according to an embodiment of the present disclosure.
FIG. 8 is a planar optical path schematic diagram of an optical waveguide array according to an embodiment of the present disclosure.
FIG. 9 is a three-dimensional optical path schematic diagram of an optical waveguide array according to an embodiment of the present disclosure.
FIG. 10 is a schematic diagram of a partial optical path structure of a flat lens according to an embodiment of the present disclosure.
FIG. 11 is a schematic diagram of a partial optical path of a vehicle-mounted display system according to an embodiment of the present disclosure.
FIG. 12 is a schematic diagram of another partial optical path of the vehicle-mounted display system according to an embodiment of the present disclosure.
FIG. 13 is a schematic diagram of electrical connection relationships of a vehicle-mounted display system according to an embodiment of the present disclosure.
FIG. 14 is a perspective view of a vehicle-mounted display system according to another embodiment of the present disclosure.
FIG. 15 is a perspective view of a vehicle-mounted display system according to yet another embodiment of the present disclosure.

**Description of Main Reference Numerals:**

| | |
|---|---|
| vehicle-mounted display system | 100 |
| flat lens | 10 |
| first transparent window | 11 |
| first optical waveguide array | 13 |
| second optical waveguide array | 15 |
| second transparent window | 17 |
| optical waveguide | 130 |
| reflection unit | 131 |
| reflective film | 133 |
| adhesive | 140 |
| first reflector | 20 |
| first display panel | 30 |
| second reflector | 40 |
| second display panel | 50 |
| third reflector | 60 |
| imaging medium | 70 |
| control device | 90 |
| light sensor | 91 |
| sound sensor | 93 |
| vehicle | 200 |
| center console | 210 |
| windshield | 230 |
| first image light | L1 |
| second image light | L2 |
| third image light | L3 |
| fourth image light | L4 |
| first real image | A |
| second real image | B |
| image source | E |
| aerial real image | E' |
| angle | α, β, θ |
| incident angle | α1, α2, α3, γ1, γ2, γ3 |
| reflection angle | β1, β2, β3, δ1, δ2, δ3 |
| distance | L |
| first direction | X |
| second direction | Y |
| third direction | Z |

The following detailed description will further illustrate the present disclosure with reference to the above-mentioned drawings.

### DETAILED DESCRIPTION

The technical solutions of the embodiments of the present disclosure will be clearly and completely described below with reference to the accompanying drawings of the embodiments of the present disclosure. Obviously, the described embodiments are part of the embodiments of the present disclosure, rather than all of the embodiments.

Unless otherwise defined, all technical and scientific terms used in the present disclosure have the same meanings as commonly understood by those skilled in the technical field to which the present disclosure pertains. The terms used in the specification of the present disclosure are only for the purpose of describing specific embodiments, and are not intended to limit the present disclosure.

To further elaborate the technical means and effects adopted by the present disclosure to achieve the intended purpose, the present disclosure is described in detail below in connection with the accompanying drawings and preferred embodiments.

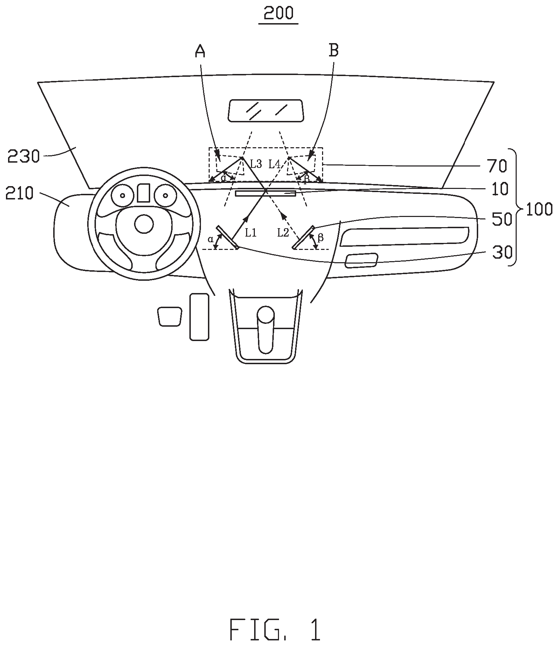

Referring to FIG. 1, an embodiment of the present disclosure provides a vehicle-mounted display system 100 includes: a flat lens 10, a first display panel 30, a second display panel 50, and an imaging medium 70. The flat lens 10 is disposed on a light-emitting side of the first display panel 30 and a light-emitting side of the second display panel 50. The first display panel 30 is configured to emit first image light L1, and the second display panel 50 is configured to emit second image light L2. The flat lens 10 is configured to receive the first image light L1 and emit third image light L3, and further configured to receive the second image light L2 and emit fourth image light L4. The imaging medium 70 is disposed on a side of the flat lens 10 away from the first display panel 30 and the second display panel 50, and is configured to receive and reflect the third image light L3 for projection to form a first real image A, and to receive and reflect the fourth image light L4 for projection to form a second real image B.

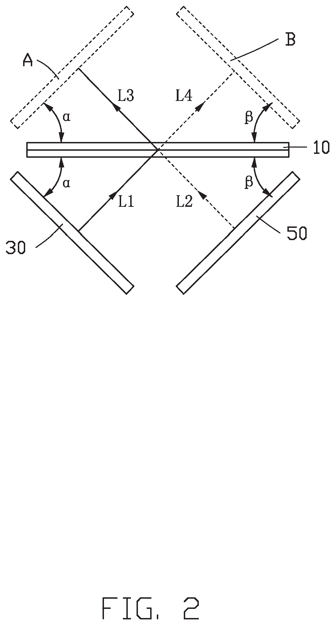

Specifically, referring to FIG. 2, an angle α is formed between the first display panel 30 and the flat lens 10. A side of the first display panel 30 facing the flat lens 10 is used to emit the first image light L1. After the first image light L1 enters the flat lens 10, it is converted into the third image light L3 emitted by the flat lens 10, and the third image light L3 is symmetric with respect to the first image light L1 about the flat lens 10. Therefore, the emitted third image light L3 converges into mid-air to form the first real image A, and the first real image A formed by projection of the third image light L3 is symmetric with the first display panel 30 about the flat lens 10, the first real image A also forms the same angle α with the flat lens 10. Similarly, an angle β is formed between the second display panel 50 and the flat lens 10. A side of the second display panel 50 facing the flat lens 10 is used to emit the second image light L2. After the second image light L2 enters the flat lens 10, it is converted into the fourth image light L4 emitted by the flat lens 10, and the fourth image light L4 is symmetric with respect to the second image light L2 about the flat lens 10. Therefore, the emitted fourth image light L4 converges into mid-air to form the second real image B, and the second real image B formed by projection of the fourth image light L4 is symmetric with the second display panel 50 about the flat lens 10, the second real image B also forms the same angle β with the flat lens 10.

In the present embodiment, the angle α between the first display panel 30 and the flat lens 10 is 30°-60°, and the angle β between the second display panel 50 and the flat lens 10 is 30°-60°. Each of the angles α and β may be a specific value within the range of 30°-60°. For example, the aforementioned angle α may be 45°, and the aforementioned angle β may also be 45°. Taking the first display panel 30 as an example, since the first display panel 30 and the first real image A are symmetric about the flat lens 10, the angle between the first display panel 30 and the flat lens 10 is equal to the angle between the first real image A and the flat lens 10. By setting the angle α between the first display panel 30 and the flat lens 10 to be 30°-60°, the first real image A can be mapped into mid-air, facilitating observation and interaction by a user. Moreover, the inclined arrangement of the first display panel 30 allows the first image light L1 to be substantially projected onto the flat lens 10, thereby improving the brightness of the first real image A, which is conducive to improving optical efficiency. The angle α and the angle β may be the same or different, and the present disclosure does not limit this.

In the present embodiment, the flat lens 10 is an equivalent negative refractive flat lens, that is, light incident on the flat lens 10 will emerge in a direction symmetric with respect to the flat lens 10. In other embodiments, the flat lens 10 may also be a dihedral corner reflector, and the present disclosure does not limit this.

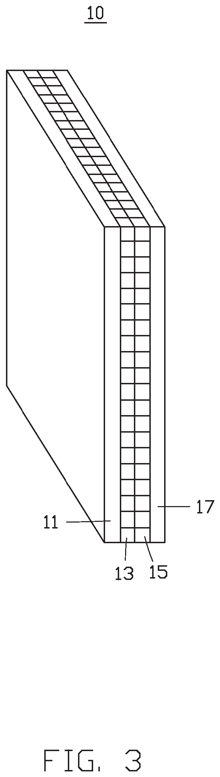

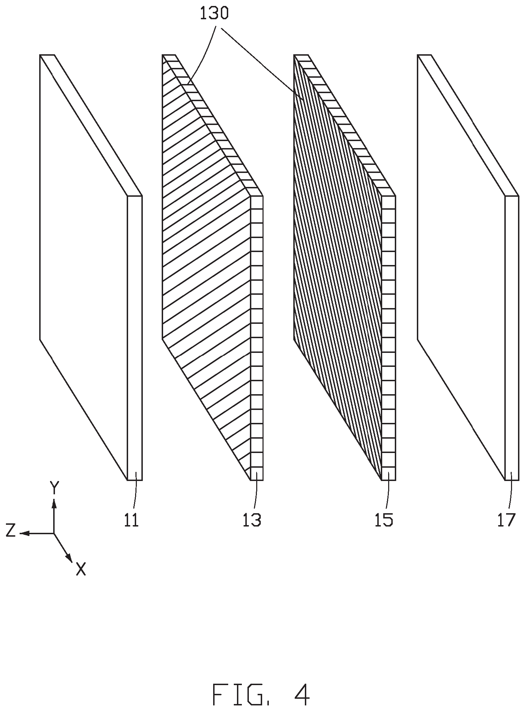

Referring to FIG. 3 and FIG. 4, in the present embodiment, the flat lens 10 includes a first transparent window 11, a first optical waveguide array 13, a second optical waveguide array 15, and a second transparent window 17, which are sequentially stacked. The first transparent window 11 and the second transparent window 17 are made of transparent materials. The first transparent window 11 is configured to protect the first optical waveguide array 13, and the second transparent window 17 is configured to protect the second optical waveguide array 15.

The first optical waveguide array 13 includes a plurality of optical waveguides 130 arranged in parallel along a first direction X, and the second optical waveguide array 15 includes a plurality of optical waveguides 130 arranged in parallel along a second direction Y. The first direction X is perpendicular to the second direction Y, that is, the arrangement direction of the plurality of optical waveguides 130 in the first optical waveguide array 13 is perpendicular to the arrangement direction of the plurality of optical waveguides 130 in the second optical waveguide array 15. The first transparent window 11, the first optical waveguide array 13, the second optical waveguide array 15, and the second transparent window 17 are sequentially arranged along a third direction Z. The first optical waveguide array 13 and the second optical waveguide array 15 have the same thickness along the third direction Z, which facilitates design and production.

Both the first transparent window 11 and the second transparent window 17 have two optical surfaces, and the first transparent window 11 and the second transparent window 17 have a transmittance of 90%-100% for light with wavelengths between 390 nm and 760 nm. The material of the first transparent window 11 and the second transparent window 17 may be glass or at least one polymer such as plastic, acrylic resin, etc. Both the first transparent window 11 and the second transparent window 17 serve to protect either the first optical waveguide array 13 or the second optical waveguide array 15, and to remove unwanted light. In other embodiments, if the strength of the closely orthogonally bonded first optical waveguide array 13 and second optical waveguide array 15 is sufficient, or if the installation environment has thickness constraints, only one transparent substrate may be provided, or no transparent substrate may be provided at all, and the present disclosure does not limit this.

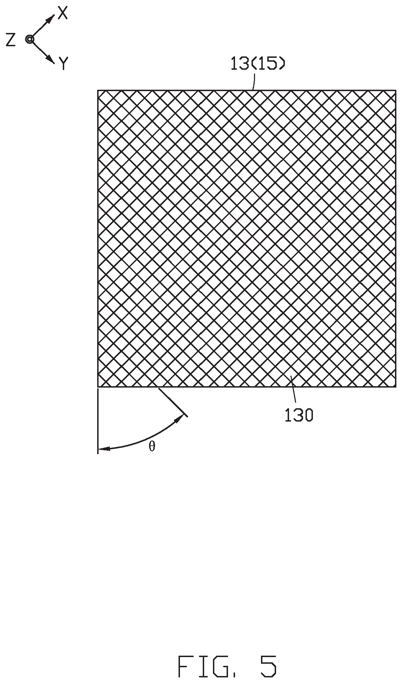

Referring to FIG. 4 and FIG. 5, each of the first optical waveguide array 13 and the second optical waveguide array 15 includes a plurality of optical waveguides 130 with rectangular cross sections. The length of each optical waveguide 130 is determined by the outer dimensions of the first optical waveguide array 13 and the second optical waveguide array 15, so the plurality of optical waveguides 130 in the first optical waveguide array 13 or the second optical waveguide array 15 have different lengths. The plurality of optical waveguides 130 in the first optical waveguide array 13 extend along the first direction X, and the plurality of optical waveguides 130 in the second optical waveguide array 15 extend along the second direction Y. The extending directions of the optical waveguides 130 in the first optical waveguide array 13 and the second optical waveguide array 15 are perpendicular to each other, when viewed from the third direction Z (the thickness direction of the flat lens 10), the first optical waveguide array 13 and the second optical waveguide array 15 are orthogonally arranged, so that light beams in orthogonal directions converge at one point, and the object surface and image surface (light source side and imaging side) are symmetric with respect to the flat lens 10, thereby producing an equivalent negative refraction effect and realizing aerial imaging.

The first optical waveguide array 13 or the second optical waveguide array 15 is composed of a plurality of parallelly arranged optical waveguides 130, and the plurality of optical waveguides 130 are obliquely arranged at an angle of 30°-60° with respect to the vertical direction in the user's view. Specifically, the first optical waveguide array 13 may be composed of a plurality of optical waveguides 130 arranged side by side at an angle θ of 30°-60°, and each of the plurality of optical waveguides 130 have rectangular cross sections, where θ is the angle between the optical waveguide 130 and the vertical direction in the user's view. The second optical waveguide array 15 may be composed of optical waveguides 130 arranged side by side perpendicular to the optical waveguides 130 in the first optical waveguide array 13, and each of the plurality of optical waveguides 130 have rectangular cross sections. In other embodiments, the arrangement directions of the optical waveguides 130 in the two optical waveguide arrays may be interchanged. For example, the optical waveguides 130 in the first optical waveguide array 13 may extend along the second direction Y, and the optical waveguides 130 in the second optical waveguide array 15 may extend along the first direction X. The present disclosure does not limit this, as long as, when viewed from the third direction Z (thickness direction), the first optical waveguide array 13 and the second optical waveguide array 15 are orthogonally arranged, so that light beams in orthogonal directions converge at one point, and the object/image planes (light source side and imaging side) are symmetric with respect to the flat lens, thereby producing an equivalent negative refraction effect and realizing aerial imaging, all within the scope of the present disclosure. The optical waveguides 130 have an optical refractive index n1, and in some embodiments, n1>1.4, for example, n1 may be 1.5, 1.8, 2.0, etc.

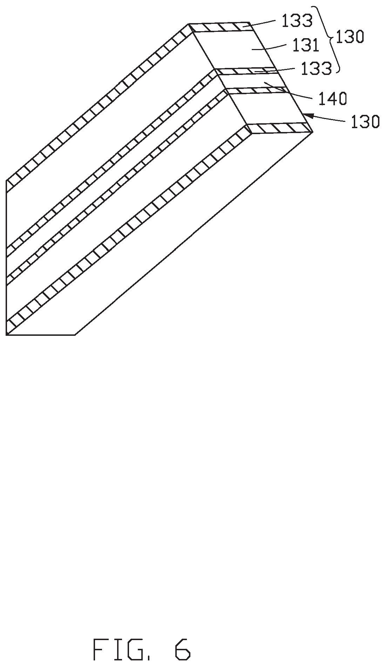

Referring to FIG. 6, the flat lens further includes an adhesive 140. For the first optical waveguide array 13 and the second optical waveguide array 15, there are two interfaces between each optical waveguide 130 and its adjacent optical waveguide 130, and each interface is bonded by the adhesive 140 having good transparency. The adhesive 140 may be a photosensitive adhesive or a thermosetting adhesive, and the thickness of the adhesive 140 is greater than 0.001 mm, for example, 0.002 mm, 0.003 mm, or 0.0015 mm, and the specific thickness may be set according to actual needs. Adhesive 140 (not shown) may also be provided between the first transparent window 11, the first optical waveguide array 13, the second optical waveguide array 15, and the second transparent window 17 of the flat lens 10 to increase firmness.

The optical waveguide 130 includes a reflection unit 131 and a reflective film 133 disposed on one side or both sides of the reflection unit 131 along the arrangement direction of the plurality of optical waveguides 130. Specifically, in the present embodiment, in the arrangement direction of the plurality of optical waveguides 130, both sides of each reflection unit 131 are coated with a reflective film 133. The material of the reflective film 133 may be metallic material such as aluminum or silver, or other non-metallic compound materials that achieve total reflection. The function of the reflective film 133 is to prevent light from entering adjacent optical waveguide arrays without total reflection and forming stray light that affects imaging. In other embodiments, the reflective film 133 may be coated only on one side of the optical waveguide 130. A dielectric film may also be added to the reflective film 133 of each reflection unit 131 to improve light reflectance.

The cross-sectional shape of a single reflection unit 131 is rectangular. The cross-sectional width of a single reflection unit 131 is 0.1 mm-5 mm, and the cross-sectional length is 0.1 mm-5 mm. To obtain a better imaging effect, the cross-sectional width may also be 0.1 mm-2 mm, and the cross-sectional length may also be 0.1 mm-2 mm. For example, the cross-sectional width may be 0.2 mm and the cross-sectional length may be 0.2 mm, or the cross-sectional width may be 0.5 mm and the cross-sectional length may be 0.5 mm. For large-screen display, multiple optical waveguide arrays may be spliced together to meet large size requirements. The overall shape of the first optical waveguide array 13 and the second optical waveguide array 15 may be set according to disclosure needs. In the present embodiment, the first optical waveguide array 13 and the second optical waveguide array 15 are each generally rectangular in shape, with the reflection units 131 at the two opposite corners being triangular, and the reflection units 131 in the middle being trapezoidal. The lengths of individual reflection units 131 are different; the reflection unit 131 located on the diagonal of the rectangle has the longest length, and the reflection units 131 at the two ends have the shortest lengths.

In addition, the flat lens 10 may further include an anti-reflection member and a viewing-angle control member (not shown). The anti-reflection member can improve the overall transmittance of the flat lens 10, and can improve the clarity and brightness of the first real image A and the second real image B. The viewing-angle control member can be used to eliminate residual images of the first real image A and the second real image B, reduce dizziness for the observer, and prevent the observer from peeping into the interior of the vehicle-mounted display system 100 from other angles, thereby improving the overall aesthetics of the vehicle-mounted display system 100. The anti-reflection member and the viewing-angle control member may be combined, or may be independently disposed between the first transparent window 11 and the first optical waveguide array 13, between the second transparent window 17 and the second optical waveguide array 15, between the first optical waveguide array 13 and the second optical waveguide array 15, on the side of the first transparent window 11 away from the first optical waveguide array 13, or on the side of the second transparent window 17 away from the second optical waveguide array 15.

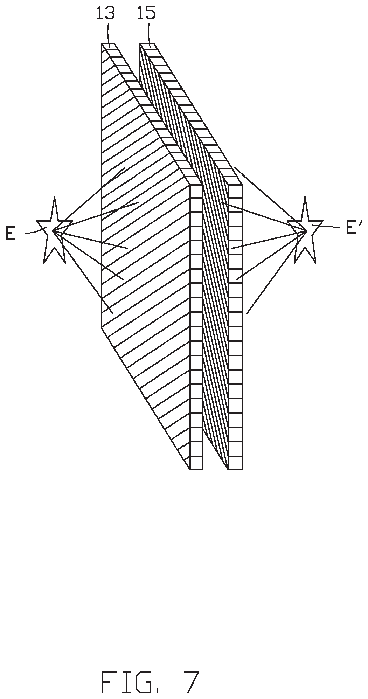

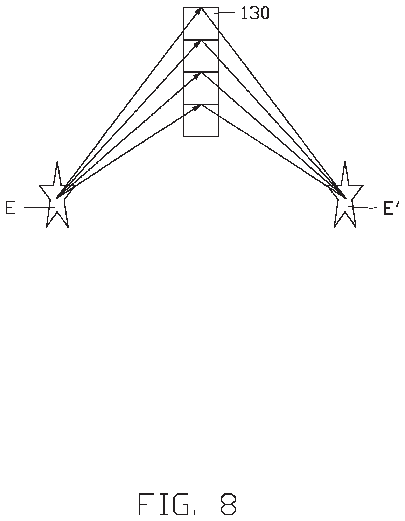

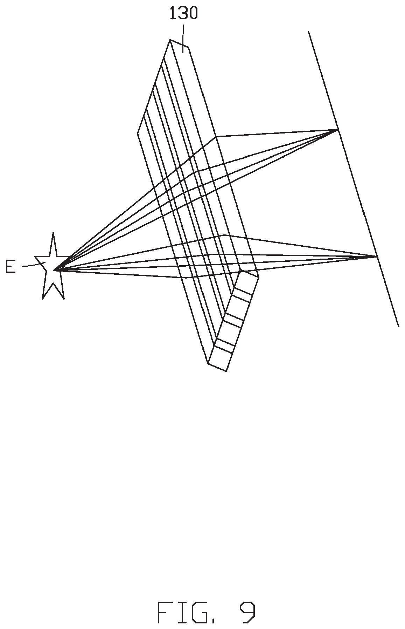

The principle of aerial imaging realized by the flat lens 10 is explained below. Referring to FIG. 7, FIG. 8, and FIG. 9, at the micrometer scale, the flat lens 10 uses the orthogonal double-layer waveguide array to decompose any optical signal from the image source E into orthogonal components. The optical signal emitted by the image source E is projected onto the first optical waveguide array 13 along the third direction Z, and diverges along the first direction X and the second direction Y. A Cartesian coordinate system is established with the position of the image source E as the origin, the first direction X as the x-axis, and the second direction Y as the y-axis, and the light emitted by the image source E is decomposed in this coordinate system into two mutually orthogonal light beams diverging along the x-axis and the y-axis, respectively. When the light emitted by the image source E is incident on the first optical waveguide array 13, the light diverging along the y-axis is perpendicular to the plurality of optical waveguides 130 in the first optical waveguide array 13, and thus sequentially enters different optical waveguides 130, and after being incident on the reflective film 133, is totally reflected and emitted from the optical waveguides 130 at a reflection angle equal to the incident angle. The light sequentially reflected and emitted by the plurality of optical waveguides 130 in the first optical waveguide array 13 is incident on the second optical waveguide array 15, and is parallel to the plurality of optical waveguides 130 extending along the y-axis in the second optical waveguide array 15, thus directly passing through the second optical waveguide array 15, and finally converging to form a part of the aerial real image E'. Meanwhile, the light diverging along the x-axis is parallel to the plurality of optical waveguides 130 in the first optical waveguide array 13, so it directly passes through the first optical waveguide array 13 and is incident on the second optical waveguide array 15, and is sequentially reflected and emitted by the plurality of optical waveguides 130 in the second optical waveguide array 15, finally converging to form another part of the aerial real image E'. The light emitted from the image source E is decomposed into two beams diverging along the first direction X and the second direction Y, which are respectively reflected by the first optical waveguide array 13 and the second optical waveguide array 15, and finally converge to form the aerial real image E', and the aerial real image E' is symmetric to the image source E about the flat lens 10. Therefore, light rays in any direction passing through the flat lens 10 can achieve mirror symmetry, and divergent light from any light source passing through the flat lens 10 will re-converge at a symmetric position to form an aerial real image. The imaging distance L of the aerial real image E' is the same as the distance from the flat lens 10 to the image source E, equidistant imaging, and the position of the aerial real image E' is into mid-air, requiring no specific carrier, but directly presenting a real image into mid-air. Therefore, the image in the space seen by the user is formed by the convergence of the light emitted from the image source E.

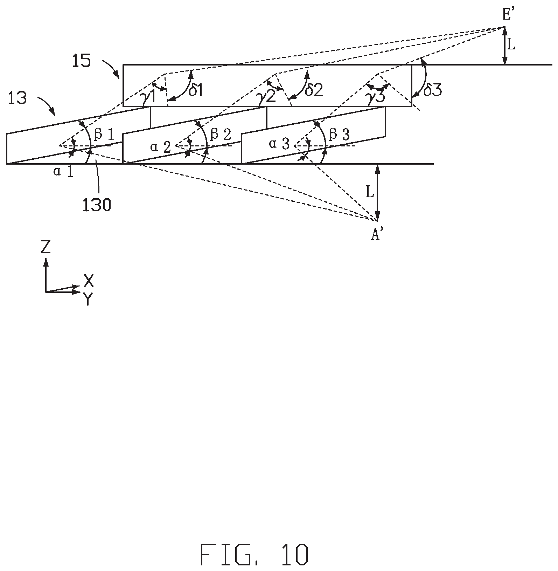

When the light emitted by the image source E passes through the flat lens 10, the above process occurs on the flat lens 10. Specifically, referring to FIG. 10, the incident angles of the light emitted by the image source E on three optical waveguides 130 in the first optical waveguide array 13 as shown in FIG. 10 are α1, α2, and α3, respectively, and the corresponding reflection angles of the light emitted by the image source E on the three optical waveguides 130 are β1, β2, and β3, where α1=β1, α2=β2, and α3=β3. After being reflected by the first optical waveguide array 13, the incident angles on one optical waveguide 130 in the second optical waveguide array 15 as shown in FIG. 10 are γ1, γ2, and γ3, respectively, and the corresponding reflection angles on that optical waveguide 130 are δ1, δ2, and δ3, where γ1=δ1, γ2=δ2, and γ3=δ3.

Further, the incident angles of the image source E on the n optical waveguides 130 in the first optical waveguide array 13 are α1, α2, α3, ..., αn, and the distance between the image source E and the flat lens 10 is L. Then the distance between the imaging position of the aerial real image E' and the flat lens 10 is also L, and the viewing angle of the aerial real image E' is 2×max(α).

If the size of the flat lens 10 is small, the image can only be seen at a certain distance from the imaging side of the flat lens 10. However, if the size of the flat lens 10 is increased, a larger imaging distance can be achieved, thereby increasing the field of view.

The first optical waveguide array 13 and the second optical waveguide array 15 have the same thickness, which can simplify the structural complexity of the first optical waveguide array 13 and the second optical waveguide array 15, and can reduce the manufacturing difficulty, improve production efficiency, and reduce production costs. It should be noted that "the same thickness" here is a relative range, not absolutely identical, meaning that a certain thickness difference between the optical waveguide arrays is permissible for the purpose of improving production efficiency, provided that the aerial imaging quality is not affected.

In other embodiments, the flat lens 10 may have other structures, for example, the flat lens 10 may include only one optical waveguide array (not shown), which includes a plurality of reflection units arranged in an array along the first direction X and the second direction Y, the reflection units being cubic columnar structures, and each of the four columnar surfaces of each reflection unit is coated with a reflective film. This single-layer optical waveguide array combines the first optical waveguide array 13 and the second optical waveguide array 15 into one layer, and its imaging principle is the same as that of the stacked structure of the first optical waveguide array 13 and the second optical waveguide array 15.

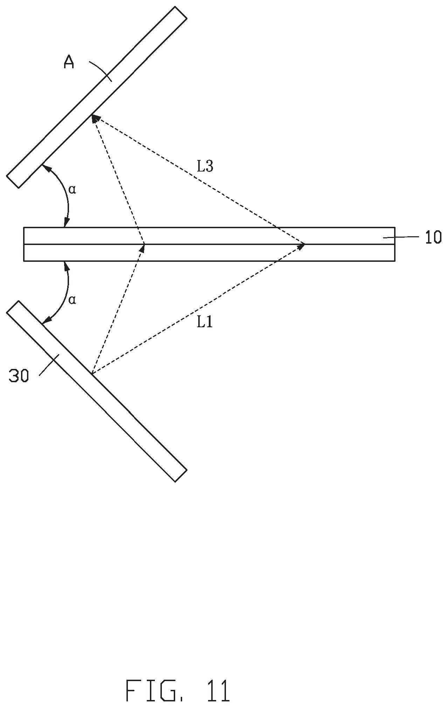

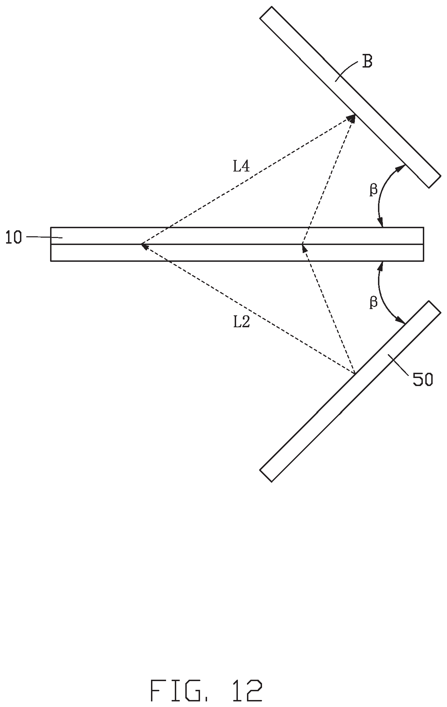

Referring to FIG. 2, FIG. 11, and FIG. 12, the flat lens 10 is disposed on the light-emitting side of the first display panel 30 and the light-emitting side of the second display panel 50, the first display panel 30 emits the first image light L1 toward the flat lens 10, and the first image light L1 is reflected by the flat lens 10 to emit the third image light L3, finally converging on the side of the flat lens 10 away from the first display panel 30 to form the first real image A into mid-air, and the first real image A is symmetric to the first display panel 30 about the flat lens 10. The second display panel 50 emits the second image light L2 toward the flat lens 10, and the second image light L2 is reflected by the flat lens 10 to emit the fourth image light L4, finally converging on the side of the flat lens 10 away from the second display panel 50 to form the second real image B into mid-air, and the second real image B is symmetric to the second display panel 50 about the flat lens 10. Since the flat lens 10 can symmetrically project light from one side to the other side without being limited by the incident direction of the light, the first display panel 30 and the second display panel 50 can be placed on the same side of the flat lens 10, thereby projecting and forming the first real image A and the second real image B into mid-air through a single flat lens 10. It should be noted that, by providing the flat lens 10, the first real image A and the second real image B can be simultaneously projected and formed. In some embodiments, the flat lens 10 may also project either the first real image A or the second real image B at different times, respectively.

The first display panel 30 and the second display panel 50 may be planar display devices or three-dimensional display devices. Specifically, the first display panel 30 and the second display panel 50 may be two-dimensional display panels, such as display panels using cathode ray tube (CRT) display technology, liquid crystal display (LCD) technology, light emitting diode (LED) display technology, organic light emitting diode (OLED) display technology, quantum dot light emitting diode (QLED) display technology, plasma display panel (PDP) technology, micro light emitting diode (Micro LED) display technology, mini light emitting diode (Mini LED) display technology, digital light processing (DLP) display technology, etc. They may also be true three-dimensional display panels using holographic three-dimensional imaging technology, static volume imaging technology, translational volume scanning technology, rotational volume scanning technology, etc., or pseudo-three-dimensional display panels using the principle of binocular parallax. The present disclosure does not limit this.

The light-emitting surfaces of the first display panel 30 and the second display panel 50 may also be coated with an anti-reflection film or a moth-eye film. Specifically, the anti-reflection film is used to increase light transmittance, while the moth-eye film can improve the resolution and anti-interference capability of the first display panel 30 and the second display panel 50.

With continued reference to FIG. 1, the first display panel 30 and the second display panel 50 are disposed at opposite ends of the flat lens 10. The imaging medium 70 is disposed on the side of the flat lens 10 away from the first display panel 30 and the second display panel 50, and the imaging medium 70 is used to reflect the third image light L3 and the fourth image light L4, thereby changing the positions of the first real image A and the second real image B so that they can be oriented in different directions. Specifically, in the present embodiment, the imaging medium 70 is disposed obliquely with respect to the flat lens 10, and is parallel to the arrangement direction of the first display panel 30 and the second display panel 50, so that the third image light L3 and the fourth image light L4 are reflected toward a direction perpendicular to the arrangement direction of the first display panel 30 and the second display panel 50, thereby flipping the positions of the first real image A and the second real image B. In other embodiments, the imaging medium 70 may also be disposed at other positions according to use requirements, and the present disclosure does not limit this.

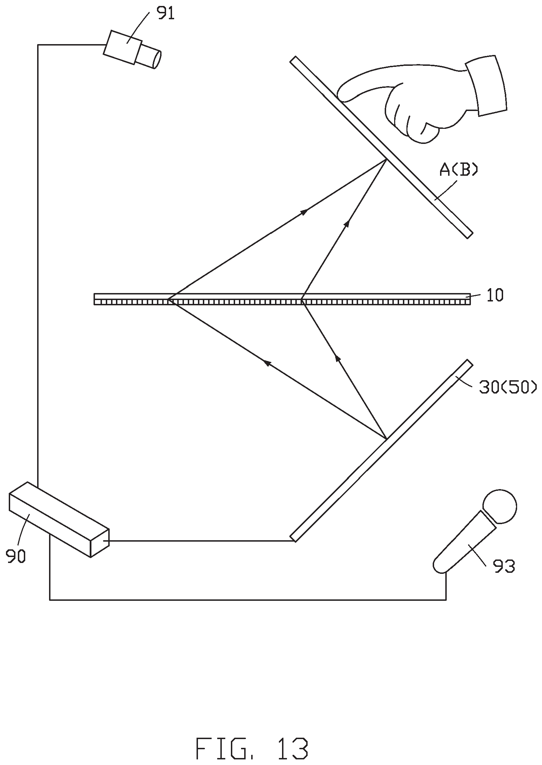

Referring to FIG. 13, the vehicle-mounted display system 100 further includes a control device 90, a light sensor 91, and a sound sensor 93. The control device 90 is electrically connected to the first display panel 30 and the second display panel 50, respectively, and is used to control the images displayed on the first display panel 30 and the second display panel 50. The light sensor 91 is electrically connected to the control device 90, and is used to sense an interactive action and send a first interaction signal to the control device 90. The sound sensor 93 is electrically connected to the control device 90, and is used to receive a sound signal and send a second interaction signal to the control device 90.

The control device 90 is used to adjust the display contents of the first display panel 30 and the second display panel 50 according to a user's interactive operation, thereby completing interaction with the user. The user's interactive operation may include interactive actions or interactive speech. Interactive actions may include gestures or touches on the first real image A and the second real image B. The light sensor 91 generates the first interaction signal by recognizing gestures or direct touch actions on the first real image A and the second real image B. The sound sensor 93 generates the second interaction signal by recognizing the user's interactive speech. The control device 90 analyzes the first interaction signal and the second interaction signal to adjust the display contents of the first display panel 30 and the second display panel 50, thereby completing human-machine interaction.

In the present embodiment, the vehicle-mounted display system 100 may further include a speaker electrically connected to the control device 90 for emitting sound. The control device 90 may also control the content emitted by the speaker according to the first interaction signal and the second interaction signal, thereby completing human-machine interaction.

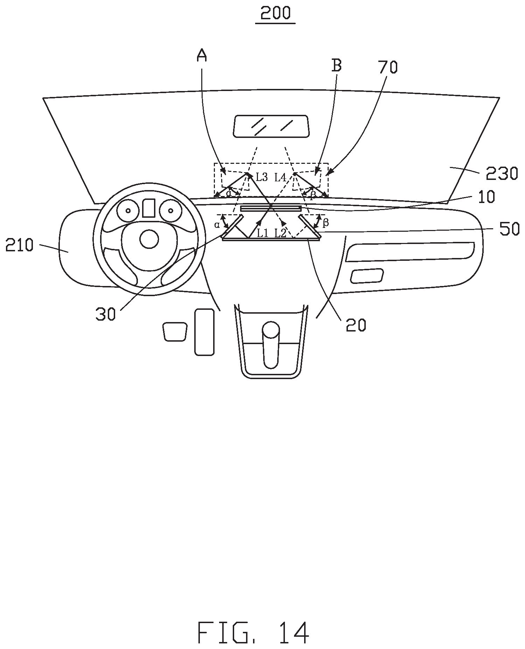

Referring to FIG. 14, in another embodiment, the vehicle-mounted display system 100 further includes a first reflector 20 disposed on the side of the first display panel 30 and the second display panel 50 away from the flat lens 10, for reflecting the first image light L1 and the second image light L2 onto the flat lens 10. Specifically, the difference from the previous embodiment is that the first image light L1 emitted by the first display panel 30 and the second image light L2 emitted by the second display panel 50 are reflected once by the first reflector 20 and then incident on the flat lens 10, rather than being directly incident on the flat lens 10. With other parts of the optical path of the vehicle-mounted display system 100 unchanged, the positions of the first display panel 30 and the second display panel 50 are symmetrically flipped about the first reflector 20 as the axis, that is, the value of the angle α between the first display panel 30 and the flat lens 10 remains unchanged, but the first image light L1 is emitted toward the side away from the flat lens 10 and is reflected by the first reflector 20 to be incident on the flat lens 10. By providing the first reflector 20, the positions of the first display panel 30 and the second display panel 50 can be adjusted, thereby reducing the space occupied by the vehicle-mounted display system 100 in the direction perpendicular to the flat lens 10, and improving space utilization.

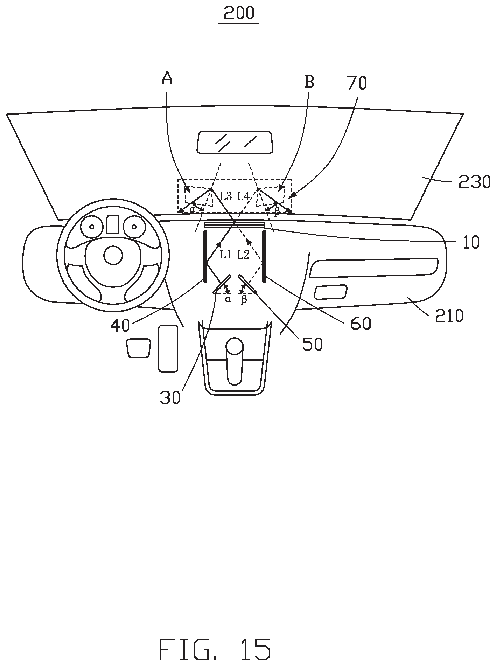

Referring to FIG. 15, in another embodiment, the vehicle-mounted display system 100 further includes a second reflector 40 and a third reflector 60. The second reflector 40 is disposed between the first display panel 30 and the flat lens 10, and used to reflect the first image light L1 onto the flat lens 10. The third reflector 60 is disposed between the second display panel 50 and the flat lens 10, and used to reflect the second image light L2 onto the flat lens 10. Specifically, the second reflector 40 is disposed perpendicular to the flat lens 10. Compared with the embodiment shown in FIG. 1, the position of the first display panel 30 is symmetrically flipped about the second reflector 40 as the axis. The third reflector 60 is disposed perpendicular to the flat lens 10. Compared with the embodiment shown in FIG. 1, the position of the second display panel 50 is symmetrically flipped about the third reflector 60 as the axis. By providing the second reflector 40 and the third reflector 60, the positions of the first display panel 30 and the second display panel 50 can be adjusted, thereby reducing the space occupied by the vehicle-mounted display system 100 in the arrangement direction of the first display panel 30 and the second display panel 50, and improving space utilization.

In other embodiments, different reflectors may also be provided according to actual needs, thereby changing the positions of the first display panel 30 and the second display panel 50 and thus adjusting the spatial layout of the vehicle-mounted display system 100. For example, according to actual needs, half of the first reflector 20 may be provided to change the position of the first display panel 30, and the third reflector 60 may be provided to adjust the position of the second display panel 50; or the angle of the reflector with respect to the flat lens 10 may be adjusted, etc.

The vehicle-mounted display system 100 provided by the embodiments of the present disclosure, provided with the first display panel 30, the second display panel 50, and the flat lens 10, can project the contents displayed by both the first display panel 30 and the second display panel 50 into the mid-air through the single flat lens 10, thereby forming the first real image A and the second real image B independently. Positions of the first real image A and the second real image B can be adjusted by respectively reflecting the third image light L3 and the fourth image light L4 by the imaging medium 70, so that the first real image A and the second real image B can be projected and displayed toward different directions, the first real image A and the second real image B can be projected and displayed corresponding to a position of the driver and a position of the front passenger respectively, thereby achieving multi-view viewing and improving the viewing angle of the vehicle-mounted display system 100.

Referring to FIG. 1, FIG. 14, and FIG. 15 again, an embodiment of the present disclosure also provides a vehicle 200, which includes a center console 210 and the vehicle-mounted display system 100 according to any of the above embodiments. The vehicle-mounted display system 100 is partially embedded in the center console 210. Specifically, the flat lens 10 is embedded in the surface of the center console 210, and the first display panel 30 and the second display panel 50 are disposed inside the center console 210, so that the first real image A and the second real image B are projected to the outside of the center console 210.

The vehicle 200 further includes a windshield 230 disposed on one side of the center console 210. In the present embodiment, the imaging medium 70 of the vehicle-mounted display system 100 is integrally formed with the windshield 230. Specifically, the vehicle 200 includes a driver's seat and a passenger's seat at positions corresponding to the center console 210. The vehicle-mounted display system 100 is disposed at a central position of the center console 210, between the driver's seat and the passenger's seat. The first image light L1 emitted by the first display panel 30 passes through the flat lens 10 and is converted into the third image light L3, which is reflected by the imaging medium 70 and converges to form the first real image A. The first real image A is oriented toward the driver's seat, and the angle between the first real image A and the line of sight of a user sitting in the driver's seat looking straight ahead is equal to the angle α. The second image light L2 emitted by the second display panel 50 passes through the flat lens 10 and is converted into the fourth image light L4, which is reflected by the imaging medium 70 and converges to form the second real image B. The second real image B is oriented toward the passenger's seat, and the angle between the second real image B and the line of sight of a user sitting in the passenger's seat looking straight ahead is equal to the angle β. Therefore, a user sitting in the driver's seat, when using the vehicle-mounted display system 100, only needs to shift his/her line of sight by the angle α to observe the first real image A and obtain information from it. During the process of obtaining information, the user's peripheral vision can still keep the road in sight, without deviating from the road, which is conducive to improving driving safety. Meanwhile, the user sitting in the passenger's seat can also obtain information through the second real image B, meeting the usage needs from different viewing angles.

It should be noted that the above examples are only used to illustrate the technical solutions of the present disclosure rather than to limit them. Although the present disclosure has been described in detail with reference to the preferred embodiments, it should be understood by those skilled in the art that the technical solutions of the present disclosure can be modified or equivalently substituted without departing from the spirit and scope of the present disclosure.

## Claims

1. A vehicle-mounted display system, **characterized by** comprising:
a first display panel configured to emit first image light;
a second display panel configured to emit second image light;
a flat lens disposed on a light-emitting side of the first display panel and also on a light-emitting side of the second display panel, the flat lens configured to receive the first image light and emit third image light, and further configured to receive the second image light and emit fourth image light; and
an imaging medium disposed on a side of the flat lens away from the first display panel and the second display panel, the imaging medium configured to receive and reflect the third image light for projection to form a first real image, and further configured to receive and reflect the fourth image light for projection to form a second real image.

2. The vehicle-mounted display system of claim 1, wherein the flat lens comprises an equivalent negative refractive flat lens.

3. The vehicle-mounted display system of claim 1, wherein an angle between the first display panel and the flat lens is 30°-60°; and an angle between the second display panel and the flat lens is 30°-60°.

4. The vehicle-mounted display system of claim 1, further comprising a first reflector, wherein the first reflector is disposed on a side of the first display panel and the second display panel away from the flat lens; the first reflector is configured to reflect the first image light emitted from the first display panel and the second image light emitted from the second display panel, and is further for reflecting the first image light onto the flat lens and reflecting the second image light emitted from the second display panel onto the flat lens.

5. The vehicle-mounted display system of claim 1, further comprising a second reflector and a third reflector, wherein the second reflector is disposed between the first display panel and the flat lens and is configured to reflect the first image light emitted from the first display panel onto the flat lens; and the third reflector is disposed between the second display panel and the flat lens and is configured to reflect the second image light emitted from the second display panel onto the flat lens.

6. The vehicle-mounted display system of claim 1, further comprising a control device electrically connected to the first display panel and the second display panel respectively, and the control device is configured to control the first display panel and the second display panel to display images.

7. The vehicle-mounted display system of claim 6, further comprising a light sensor electrically connected to the control device, and the light sensor is configured to sense an interactive action of a user and to send a first interaction signal to the control device.

8. The vehicle-mounted display system of claim 6, further comprising a sound sensor electrically connected to the control device, the sound sensor is configured to receive a sound signal and for sending a second interaction signal to the control device.

9. A vehicle, **characterized by** comprising:
a center console; and
a vehicle-mounted display system according to any one of claims 1 to 8, wherein the vehicle-mounted display system is partially embedded in the center console.

10. The vehicle of claim 9, further comprising a windshield disposed on one side of the center console, wherein the imaging medium is integrally formed with the windshield.
